# EUROPÄISCHE PATENTSCHRIFT

(11) **EP 3 929 235 B1**
(45) Veröffentlichungstag und Bekanntmachung des Hinweises auf die Patenterteilung: **18.12.2024**
(21) Anmeldenummer: 21401027.4
(22) Anmeldetag: 24.06.2021
(51) Int. Cl.: C08H 1/06, C08K 5/053, C08L 89/06, C09D 189/06

(54) **MEHRKOMPONENTENSYSTEM ZUM HERSTELLEN EINES MATERIALS**
MULTICOMPONENT SYSTEM FOR PRODUCING A MATERIAL
SYSTÈME DE COMPOSANTS MULTIPLES DESTINÉ À LA FABRICATION D'UNE MATIÈRE

(30) Priorität: 25.06.2020 DE 102020116722
(43) Veröffentlichungstag der Anmeldung: 29.12.2021
(73) Patentinhaber: Klinger, Christian, 84539 Ampfing (DE)
(72) Erfinder: Klinger, Christian, 84539 Ampfing (DE)
(74) Vertreter: Rothkopf, Ferdinand

(56) Entgegenhaltungen:
- EP-A1- 0 960 922
- EP-A1- 0 969 056

## Beschreibung

### Hintergrund der Erfindung

Die Erfindung betrifft ein Mehrkomponentensystem zum Herstellen eines Materials, insbesondere eines Überzugsmaterials für bevorzugt Biomasse, mit einer Komponente A und einer davon reaktionsinhibierend getrennt angeordneten Komponente B. Ferner betrifft die Erfindung ein Material, hergestellt mittels eines solchen Mehrkomponentensystems und ein Verfahren zum Herstellen eines solchen Materials, insbesondere eines Überzugsmaterials für bevorzugt Biomasse.

Als Biomasse wird hierbei organische Masse bzw. Materie verstanden, die in der Natur vorkommt. So zählt zur Biomasse energetisch nutzbare Biomasse, die pflanzlichen oder tierischen Ursprungs ist und aus der zur energetischen Nutzung in Biogasanlagen durch mikrobiellen Abbau Biogas gewonnen wird. Ferner zählen zur Biomasse insbesondere Futterpflanzen, wie Mais und Gras, die als Nutztierfutter in Form von Silage bzw. Silofutter eingelagert werden. Sowohl das Silofutter als auch die in Biogasanlagen genutzte Biomasse werden über einen Zeitraum von mehreren Monaten in Siloanlagen im Freien gelagert. Dabei ist ein Ausschluss von Luftsauerstoff wichtig, damit eine dann natürlich ablaufende Milchsäuregärung stattfinden kann, womit die Biomasse konserviert wird.

Herkömmlich wird dazu die Biomasse mit Kunststoff-Folien aus Polyethylen (PE) abgedeckt, die in mehreren Lagen übereinander angeordnet sowie mit Sandsäcken und Reifen beschwert werden. Ein solches Abdecken erfolgt größtenteils in Handarbeit, ist sehr arbeitsintensiv und gerade bei höheren Siloanlagen auch gefährlich. Zudem müssen bei sehr großen Biomasselagern, die breiter als die Folien sind, die Folien überlappend angeordnet werden. An solchen Überlappungsstellen kann ein Luftzutritt nur schwer ausgeschlossen werden. Derart große Biomasselager wird es im Zuge eines Strukturwandels in der Landwirtschaft zukünftig immer mehr geben.

Ein weiteres Problem der herkömmlichen Abdeckung ist, dass jedes Jahr mehrere Millionen Quadratmeter Kunststoff- bzw. Plastik-Folie und damit fossile Rohstoffe verbraucht werden. Nach ihrer Verwendung ist die Plastik-Folie mit Biomasse-Anhaftungen verschmutzt und kann nur mit hohen Reinigungsaufwand recycelt werden. Stattdessen werden die Folien in der Müllverbrennungsanlage verbrannt, wobei klimaschädliches Kohlendioxid entsteht. Oftmals wird ein wildes Deponieren vorgezogen. Dabei zerfallen die Folien beim dauerhaften Lagern im Freien unter Einwirkung von UV-Licht und bilden problematisches Mikroplastik. Auch im Bereich des Obst- und Gemüseanbaus im Freiland wird viel Bodenfläche als Biomasse mit PE-Mulchfolie abgedeckt, um die Ernte zu verfrühen oder Unkraut zu unterdrücken.

Aus Umweltschutzgründen sollen in den genannten und anderen Bereichen fossile Rohstoffe geschont und Plastik vermieden werden. Dies wird immer wichtiger und in vielen klimapolitischen und gesellschaftlichen Zielen verfolgt.

Aus DE 10 2004 024 635 A1 sind Formkörper auf Basis von vernetzter Gelatine und ein Verfahren zur Herstellung solcher Formkörper bekannt. Dabei wird eine wässrige Gelatinelösung hergestellt, die gelöste Gelatine partiell vernetzt, der Formkörper ausgehend von der die partiell vernetzte Gelatine enthaltende Gelatinelösung hergestellt und dann die im Formkörper enthaltene Gelatine vernetzt. Zum Vernetzen werden als Vernetzungsmittel unter anderem Aldehyde und/oder Dialdehyde verwendet. Ferner enthält der Formkörper zusätzlich einen Weichmacher, wie Glycerin, Oligoglycerine, Oligoglykole und Sorbit.

Aus dem Schlussbericht zum Forschungsvorhaben "Multifunktionale, sprühfähige und biologisch abbaubare Folien auf Basis nachwachsender Rohstoffe im landwirtschaftlichen und gärtnerischen Kulturpflanzenbau", FKZ 22010307 (07NR103). Martin-Luther-Universität Halle-Wittenberg, Zentrum für Umweltwissenschaften UZU. Halle, März 2012. URL: https://www.fnr-server.de/ftp/pdf/berichte/22010307.pdf [abgerufen am 08.02.2021] ist es bekannt, Gelatine zum Herstellen einer sprühfähigen Mulchfolie zu verwenden. Dazu wird die Gelatine in Wasser gelöst und mit Glyoxal oder Glycoaldehyd vernetzt. Zudem wird Glycerin als Weichmacher verwendet.

Aus EP 0 960 922 A1 ist ein Verfahren zur Herstellung einer Proteinbeschichtung durch Vernetzen von eiweißhaltigem Material in Wasser mit einem Vernetzer und Aufbringen des vernetzten Materials auf einen Festkörper bekannt. Dabei dient die Proteinbeschichtung als temporäre Schutzschicht für Festkörper, wie Autos. Dazu ist die Proteinbeschichtung für eine bestimmte Zeitdauer wasserbeständig und kann bei Bedarf leicht durch Wasserbehandlung wieder entfernt werden. Dabei kann aus einer Reihe von möglichen eiweißhaltigen Materialien Gelatine gewählt werden. Zusätzlich wird ein Plastifizierer zur Reaktionsmischung gegeben.

### Zugrundeliegende Aufgabe

Der Erfindung liegt die Aufgabe zugrunde, ein Material zu schaffen und ein zugehöriges Verfahren zum Herstellen eines solchen Materials bereitzustellen, mit dem in weiten Bereichen Plastik vermieden werden kann. Insbesondere soll das Material dabei als Überzugsmaterial bzw. Abdeckmaterial für bevorzugt Biomasse und für einen weiten Bereich von anderen Anwendungsgebieten dienen.

### Erfindungsgemäße Lösung

Diese Aufgabe ist erfindungsgemäß mit einem Mehrkomponentensystem zum Herstellen eines Materials, insbesondere eines Überzugsmaterials für bevorzugt Biomasse, mit einer Komponente A und einer davon reaktionsinhibierend getrennt angeordneten Komponente B, nach Anspruch 1 gelöst. Dabei umfasst die Komponente A als Bestandteile Gelatine, Wasser und einen Elastifizierer und/oder Plastifizierer sowie die Komponente B einen Vernetzer, wobei die Gelatine und der Vernetzer dazu angepasst sind, eine kovalente Vernetzung zu bilden, wenn die reaktionsinhibierende Trennung aufgehoben ist.

Ferner ist die Aufgabe mit einem Material, hergestellt mittels eines solchen Mehrkomponentensystems, gelöst, bei dem die Komponente A und die Komponente B miteinander vermischt sind.

Erfindungsgemäß ist dabei also die Gelatine der Komponente A eine erste Reaktivkomponente und der Vernetzer der Komponente B eine zweite Reaktivkomponente. Innerhalb dieses zweikomponentigen Reaktivsystems reagieren die beiden Reaktivkomponenten chemisch miteinander, wenn, insbesondere sobald, ihre reaktionsinhibierende Trennung aufgehoben ist bzw. wird. Dazu weisen die Gelatine und der Vernetzer funktionelle Gruppen auf, die miteinander chemisch reagieren und damit eine kovalente Vernetzung zwischen den Molekülen der Gelatine und dem Vernetzer bilden. Damit ist ein Polymer als Material herstellbar, das überraschend stabil ist. Zudem beruht das Polymer bzw. Material auf Basis von Gelatine, einem natürlichen Rohstoff, und ist damit biologisch abbaubar. Es können also fossile Rohstoffe eingespart und Plastik vermieden werden. Mit dem Polymer ist das erfindungsgemäße Material gebildet, das für viele Anwendungsgebiete geeignet ist. Es hat sich überraschenderweise gezeigt, dass das derart hergestellte Material mittels seines Aufbaus von kovalenten Bindungen chemisch, physikalisch und biologisch derart beständig ist, dass ein vorzeitiger biologischer Abbau verhindert, aber ein späterer Abbau immer noch möglich ist. Die Komponenten A und B bilden durch chemische Vernetzung ein Netzwerk aus, das die chemische, physikalische und biologische Beständigkeit des resultierenden Materials derart positiv beeinflusst, dass eine Proteolyse vermindert ist. Damit ist das Material für einen gewissen Zeitraum sehr stabil und wird danach biologisch abgebaut. Hinsichtlich seiner mechanischen Eigenschaften ist das Material stabil, innerhalb eines gewissen Bereichs verformbar und insbesondere sogar elastisch verformbar.

Gelatine als erste Reaktivkomponente bzw. Hauptreaktivkomponente der Komponente A ist bekanntermaßen aus Kollagen gewonnen. Damit umfasst Gelatine als Hauptbestandteil denaturiertes bzw. hydrolysiertes Kollagen. Kollagen ist ein faserartig aufgebautes Protein aus linear verknüpften einzelnen Aminosäuren. Dabei unterscheiden sich Gelatine und Kollagen hinsichtlich ihrer Aminosäuresequenz nicht voneinander. Als funktionelle Gruppen innerhalb der Aminosäuresequenz liegen hauptsächlich Aminogruppen und auch Carbonsäuregruppen vor. Damit ist das Polymer mittels kovalenter Vernetzung der funktionellen Kollagengruppen der Gelatine mit der Komponente B gebildet. Dabei wird erfindungsgemäß bevorzugt Gelatine mit einem Bloomwert von 50 bis 400 Bloom, besonders bevorzugt von 120 bis 330 Bloom verwendet. Dabei ist der Bloomwert eine Kennzahl, mit der die Gelierkraft von Gelatine beschrieben wird. Je höher der Bloomwert, des höher ist die Gelierkraft.

Ein weiterer Bestandteil der Komponente A ist Wasser, das bevorzugt keimfrei ist. Nach einem Vermischen mit dem Wasser liegt die Gelatine innerhalb der Komponente A als wässrige Lösung oder Suspension vor. Damit wird die Reaktivität der Gelatine erhöht, was sich als vorteilhaft für die Vernetzungsreaktion herausgestellt hat.

Zudem ist ein weiterer Bestandteil der Komponente A ein Elastifizierer und/oder ein Plastifizieren Unter einem solchen Elastifizierer und/oder Plastifizierer ist ein Mittel zu verstehen, mit dem dem beim Vernetzen entstehenden Polymer eine gewisse Elastizität und/oder Plastizität verliehen ist. Es hat sich herausgestellt, dass dazu ein Mittel geeignet ist, das in seiner Molekülstruktur dazu angepasst ist, Van-der-Waals-Bindungen, Wasserstoffbrückenbindung und auch kovalente Bindungen mit der Gelatine und/oder dem Vernetzer einzugehen. Der Elastifizierer und/oder Plastifizierer wird also in gewissem Maße in die Netzstruktur des Materials mit eingebaut. Insbesondere ist dazu der Elastifizierer und/oder Plastifizierer derart gewählt, dass die Vernetzungsreaktion der Gelatine mit dem Vernetzer schneller abläuft, als eine gewisse kovalente Vernetzung des Elastifizierers und/oder Plastifizierers. Es hat sich herausgestellt, dass dazu Elastifizierer und/oder Plastifizierer mit funktionellen Hydroxygruppen besonders gut geeignet sind. Damit ist ein Material geschaffen, das elastisch und/oder plastisch, aber durchaus gut zerreißbar ist, ähnlich einer Konsistenz eines Pizzabodens. Mit solchen mechanischen Eigenschaften ist ein besonderer Vorteil erreicht, insbesondere, wenn das Material als Abdeckmaterial für Biomasse verwendet wird. Dort kann bei einer Entnahme der Silage das Material der Silageabdeckung gut maschinell zusammen mit der Silage entnommen und beim Vermischen mit der Silage zerkleinert werden, ohne zu verkleben.

Bestandteil der Komponente B ist der Vernetzer bzw. Härter, der mindestens eine funktionelle Gruppe aufweist, die mit den funktionellen Kollagengruppen der Gelatine kovalente Vernetzungsreaktionen eingehen können. Dazu sind verschiedene ein- oder mehrfunktionelle Vernetzer geeignet. Kriterien für die Auswahl des Vernetzers sind Wasserlöslichkeit, Reaktivität, Mischungsverhältnis und Gefahrstoffkennzeichnung. Bevorzugt ist der Vernetzer in wässriger Lösung bereitgestellt. Damit liegen sowohl Komponente A und Komponente B in wässriger Lösung vor und eine gute Mischbarkeit der Reaktivkomponenten ist erreicht. Eine besonders gleichmäßige Reaktion über alle in wässriger Lösung vorliegenden Komponenten hinweg ist gewährleistet. Um diesen weiter zu verbessern, ist die Komponente B besonders bevorzugt in einer verdünnten wässrigen Lösung bereitgestellt.

Mittels des Mehrkomponentensystems kann durch das Vermischen der beiden Komponenten A und B das Material erst bei Bedarf und vor Ort hergestellt werden. Dazu werden erst kurz vor einer Anwendung die Komponenten A und B miteinander vermischt. Sofort nach oder beim Vermischen wird das Material auf ein entsprechendes Substrat aufgebracht oder in eine entsprechende Form eingebracht. Nach einem dabei ablaufenden Vernetzen der Gelatine mit dem Vernetzer und insbesondere auch des Elastifizierers bzw. Plastifizierers mit dem Vernetzer ist das ausgehärtete und damit fertige Material gebildet. Dabei liegt die Reaktionszeit der Komponenten A und B in einem Bereich von Sekunden bis Minuten. Damit ist eine kurze Wartezeit erreicht, bis ein Aushärten, insbesondere eine Filmbildung eintritt. Zugleich liegt die Reaktionszeit in einem Bereich, in dem die vermischten und noch formbaren Komponenten A und B verarbeitet werden können bis die Mischung aushärtet. Dabei kann eine Geschwindigkeit des Aushärtens bzw. Vernetzens über die Menge und die Art des Vernetzers gesteuert werden. Die Vernetzungsgeschwindigkeit ist maßgeblich für eine Verarbeitungszeit, innerhalb derer die Mischung aus den Komponenten A und B geformt werden kann, bis sie ausgehärtet ist. Dabei ist die benötigte Verarbeitungszeit abhängig vom jeweiligen Anwendungsgebiet.

Damit ist ein Material geschaffen, das für viele Anwendungsgebiete geeignet ist und dort einen Ersatz für Kunststoff bzw. Plastik bietet. Je nach Anwendung kann das Material in seinem Eigenschaftsprofil entsprechend angepasst und variiert werden. Anpassungsmöglichkeiten bieten die Art des Elastifizierers und/oder Plastifizierers, die Art des Vernetzers, ein Mischungsverhältnis der jeweiligen Bestandteile der Komponenten A und B sowie ein Mischungsverhältnis der Komponente A zur Komponente B. So kann das Mischungsverhältnis je nach Anforderung in einem weiten Bereich variiert werden. Mehr Vernetzer führt zu einem stärker vernetzten, mechanisch, chemisch und biologisch stabileren Produkt. Weniger Vernetzer reduziert das Eigenschaftsprofil entsprechend. Für eine temporäre Anwendung mit entsprechend reduzierten Anforderungen und Eigenschaften kann auch auf die B-Komponente verzichtet werden.

Es hat sich herausgestellt, dass das mittels des erfindungsgemäßen Mehrkomponentensystems hergestellte Material stabil genug ist, um Witterungseinflüssen, wie Wind, Regen, Sonne und einem damit verbundenen Einfluss von UV-Licht standzuhalten. Zudem verhindert das Material einen Zutritt von Luftsauerstoff. Damit ist das Material vorteilhaft ein Überzugsmaterial für Biomasse, insbesondere eine Silageabdeckung. Dazu hat sich gezeigt, dass das Material als Silageüberzug stabil genug ist, um den Zutritt von Luftsauerstoff zu verhindern, bis ein anaerober Prozess der Milchsäuregärung abgeschlossen ist. Auch danach ist die Silage mit dem Material zuverlässig gegen äußere Einflüsse, wie Regen oder Sonne, geschützt. Ein biologischer Abbauprozess des Materials setzt erst später nach mehreren Monaten ein.

Ein zusätzlicher Vorteil ist, dass das Material der Silageabdeckung zusammen mit der Silage maschinell mit einem Siloentnahmegerät aus der Siloanlage entnommen werden kann. Zusammen mit der Silage kann das Material auch an Nutztiere verfüttert oder in die Biogasanlage zur Biogasproduktion eingebracht werden. Damit sind Arbeitszeit und Arbeitskräfte gespart. Ein herkömmliches Aufdecken des Silos durch abschnittsweises manuelles Entfernen der Kunststoff-Folien von der Silage ist nicht mehr notwendig. Zudem wird mittels des Proteingehalts des auf Gelatine basierenden Materials ein Energiegewinn sowohl beim Verfüttern als auch in der Biogasanlage erreicht. Damit eignet sich das Material als Futtermittel mit einem hohen physiologischen Brennwert. Darin enthaltene Aminosäuren bilden einen wertvollen Futterzusatz. Ferner sind dem Mehrkomponentensystem bevorzugt Kräuter, wie Ingwer, Pfefferminz und/oder weitere Mineralien zugesetzt, um die Attraktivität als Futtermittel zu steigern.

Damit ist die Erfindung bevorzugt auch auf ein mittels des erfindungsgemäßen Mehrkomponentensystems hergestelltes Überzugsmaterial gerichtet. Mit dem Überzugsmaterial ist besonders bevorzugt Biomasse, insbesondere Silage, zu überziehen bzw. abzudecken. Zudem ist die Erfindung auf eine Verwendung eines derartigen Materials zum Überziehen von Biomasse gerichtet. Dabei ist unter Biomasse bevorzugt eine als Futtermittel und/oder eine als Biogassubstrat eingesetzte Silage zu verstehen. Dazu sind zusätzlich zu Mais- und Grassilage auch andere Energiepflanzen abzudecken. Solche Energiepflanzen sind bevorzugt Zuckerrüben und Getreide, wie Weizen, Roggen und Gerste.

Alternativ oder zusätzlich bevorzugt ist die Biomasse ein Erdboden und/oder ein Pflanzsubstrat, die mit dem erfindungsgemäßen Überzugsmaterial zu überziehen sind. Das Überzugsmaterial bzw. Material wird damit als Ersatz für Mulchfolie und/oder Substratfolie verwendet. So wird die Bodentemperatur erhöht, Unkraut unterdrückt und vernichtet und/oder eine Erosion des Erdbodens verhindert. Ein Erdreich, Sand, loses Gestein oder allgemein ein Untergrund wird damit gegen Erosion und Verwitterung geschützt. Ferner übt das Material eine Sperrwirkung derart aus, dass Feuchtigkeit im Erdboden und Pflanzsubstrat gehalten wird und damit der Erdboden und das Pflanzsubstrat vor einem Flüssigkeitsverlust geschützt sind. Also wird Feuchtigkeit im Erdreich gespeichert. Eine andernfalls auftretenden Wasserverdunstung wird reduziert. Dabei dient das Material im einfachsten Fall als Barriere, um Wasser im Boden zu halten. Zudem dient das Material insbesondere bei trockneren Bedingungen als Wasserdepot. Ferner kann je nach Applikationsauftrag und Anwendung ebenso Feuchtigkeit von außen vom Erdboden und Pflanzsubstrat abgehalten werden. Zusätzlich wird eine Düngewirkung durch das dann verrottende Überzugsmaterial erreicht. Auch ein Fixieren von anderem Mulchmaterial, wie Stroh, Rindenmulch, Holz, usw. mittels des Überzugsmaterials ist eine bevorzugte Anwendung. Zudem ist bevorzugt ein Saatgut gegen ein Wegwehen und Wegspülen zu schützen. Dazu wird das Material entweder auf das bereits ausgebrachte Saatgut aufgetragen oder das Saatgut zusammen mit dem Material ausgebracht. Bei einem solchen matrixgebundenen Ausbringen ist das Saatgut mittels des Materials als Matrix fixiert und gegen einen Windversatz sowie eine Erosion insbesondere an abfallenden Böschungen geschützt. Damit können Oberflächen, Beete und Felder insbesondere auch an abfallenden Böschungen bzw. Hängen gleichmäßiger bepflanzt bzw. begrünt werden.

Ferner bevorzugt ist die Biomasse ein Saatgut bzw. Samen. Damit ist das mit dem Mehrkomponentensystem hergestellte Material bevorzugt ein Überzugsmaterial für Saatgut, mit dem das Saatgut überzogen bzw. umhüllt ist. Damit ist die Erfindung bevorzugt auch auf ein Überzugsmaterial für Saatgut gerichtet, das mittels des beschriebenen Mehrkomponentensystems hergestellt ist. Ferner ist die Erfindung bevorzugt auch auf eine Verwendung eines derartigen Materials zum Überziehen von Saatgut gerichtet. Dazu ist das Saatgut beim oder nach dem Vermischen der beiden Komponenten A und B in die dabei entstehende Masse eingebracht und damit vermischt. Das beim Aushärten entstehende Material dient als Pflanzensubstrat bzw. Keimmatrix für Pflanzensamen. Das Material bietet als Matrix ein Wasserdepot. Besonders bevorzugt ist das Material dabei zusätzlich mit mindestens einem Wirkstoff versetzt. Der Wirkstoff ist bevorzugt ein Dünger und/oder ein Pflanzenschutzmittel. Mit dem Dünger in der Matrix ist ein Düngervorrat bereitgestellt, der bei einem Zerfall der Matrix über eine bestimmte Zeitdauer hinweg dosiert freigesetzt wird. Entsprechend ist mit dem Pflanzenschutzmittel ein zielgerichteter Schutz des Saatguts direkt am Saatgut und eine dosierte Abgabe beim Zerfall der Matrix möglich. Damit bietet das Material auf Basis natürlicher Rohstoffe eine Alternative zur Saatgutbeize.

Zudem ist die Biomasse bevorzugt ein Erntegut, wie zum Beispiel Zuckerrüben oder Kartoffeln, die mit dem Überzugsmaterial insbesondere temporär abgedeckt werden. Auch im Freien lagernde Stroh- und Heuballen sind bevorzugt mit dem Überzugsmaterial zu überziehen. Ferner ist die Biomasse bevorzugt ein Wurzelwerk, das insbesondere zu einem Transportschutz von dem Material überzogen ist. Wurzeln von Pflanzen, wie Wurzelstöcke von Bäumen und Sträuchern, werden dabei vor Beschädigungen und einem Austrocknen geschützt.

Des Weiteren ist mit dem Überzugsmaterial bevorzugt ein Gegenstand zu überziehen. Damit ist die Erfindung auch auf eine Verwendung eines derartigen Materials zum Überziehen eines Gegenstands gerichtet. Dabei ist der Gegenstand besonders bevorzugt ein Gegenstand, dessen Oberfläche mittels des Materials insbesondere temporär geschützt werden soll. Die Oberfläche ist dabei bevorzugt eine empfindliche Oberfläche. Zum Schutz der zugehörigen Oberfläche bildet das Material eine Schutzschicht bzw. Schutzfolie für verschiedene Gegenstände, wie Geräte, Bauprodukte, Möbel und Kraftfahrzeuge. Dabei werden die Oberflächen vor Schmutz, Beschädigung, Wasser, Hitze und Licht geschützt. Besonders gut können damit insbesondere Lackoberflächen vor Verkratzungen geschützt werden. Besonders bevorzugt ist das Material dabei eine temporäre Transportschutzschicht. Gerade bei neuen Personenkraftwagen ist es üblich, diese Fahrzeuge auf ihrem Weg vom Hersteller zum Händler mit einer Kunststoff-Transportschutzfolie zu überziehen. Damit können mit dem erfindungsgemäßen Material als Transportschutzschicht zusätzlich große Mengen an Plastik vermieden werden.

Der Gegenstand ist ferner bevorzugt eine Hülle eines Bootes, die mit dem Überzugsmaterial als biologische Schutzschicht zu überziehen, insbesondere anzustreichen ist. Mit einer damit erzeugten Bootsschutzschicht werden schädliche Auswirkungen auf Gewässer und deren Organismen vermieden. Bevorzugt ist das Überzugsmaterial allgemein ein biologischer Anstrich, der sich durch seine feuchtigkeits- und temperaturregulierenden Eigenschaften, seinen temporären Charakter und seine biologische Basis auszeichnet. Besonders bevorzugt ist das Überzugsmaterial ähnlich eines Gelcoats genutzt. Das Überzugsmaterial hat dabei den Vorteil, auf Basis natürlicher Rohstoffe gebildet worden und im Endeffekt biologisch abbaubar zu sein.

Zudem ist mit dem Überzugsmaterial bevorzugt ein Gewebe zu überziehen. Besonders bevorzugt ist dabei das Gewebe ein menschliches und/oder tierisches Gewebe. Insbesondere ist das Gewebe ein Hautgewebe, das mit dem Material zu überziehen ist. Das Material eignet sich dabei insbesondere als direkter Wundauftrag auf die Haut bei Hautwunden wie insbesondere Brandwunden. Damit ist die Erfindung bevorzugt auch auf ein Überzugsmaterial für ein Gewebe gerichtet, das mittels des beschriebenen Mehrkomponentensystems hergestellt ist. Dabei ist derartige Material insbesondere ein Wundverbandmaterial für Gewebe. Dazu ist das Material beim oder nach dem Vermischen der beiden Komponenten A und B direkt auf die Haut und/oder Wunde aufgetragen oder zunächst auf ein Trägersubstrat aufgebracht. Das Trägersubstrat ist bevorzugt ein textiles Gewebe. Von dem Trägersubstrat ist das ausgehärtete Material dann abzunehmen und auf die Haut und/oder Wunde aufzulegen. Mittels seiner gelatine- und damit kollagenbasierten Grundstruktur ist das Überzugsmaterial in ihrer Zusammensetzung der Haut sehr ähnlich sowie gut hautverträglich. Damit ist das Material als künstliche Haut, als Wundverschluss oder als Pflaster geeignet. Es kann sogar bei Wundverbrennungen mit der Haut verwachsen.

Im Übrigen ist das mit dem erfindungsgemäßen Mehrkomponentensystem hergestellte Material zum Herstellen von biologisch abbaubaren bzw. kompostierbaren Gegenständen selbst geeignet. Damit ist die Erfindung auch auf eine entsprechende Verwendung des derartigen Materials gerichtet. Bevorzugt ist dabei der biologisch abbaubare Gegenstand ein Behälter, insbesondere ein Wegwerfbehälter, wie eine Schale oder ein Blumentopf. Mit einem biologisch abbaubaren Blumentopf aus dem erfindungsgemäß hergestellten Material können große Mengen an Plastik vermieden werden, die ansonsten jedes Jahr im Erwerbsgartenbau für Kunststoff-Blumentöpfe zur Pflanzenanzucht anfallen. Besonders bevorzugt ist der biologisch abbaubare Gegenstand ein Spielzeug insbesondere in der Schweinehaltung. Damit kann vermieden werden, dass schädliches Mikroplastik bei einem Zerkauen herkömmlich verwendeter Kunststoff-Spielzeuge in den Organismus gelangt.

Bei einer vorteilhaften Weiterbildung der Erfindung ist der Vernetzer mit mindestens einem Aldehyd, bevorzugt mit einem mehrwertigen Aldehyd, besonders bevorzugt mit einem zweiwertigen Aldehyd und ganz besonders bevorzugt mit Glutaraldehyd gestaltet. Mit dem Aldehyd ist als funktionelle Gruppe zum Vernetzen eine Aldehyd-Gruppe bereitgestellt. Die Aldehyd-Gruppe hat sich als besonders reaktiv hinsichtlich eines Vernetzens mit den funktionellen Kollagengruppen, insbesondere mit den Aminogruppen der Gelatine herausgestellt. Damit wird beim Vermischen der Komponenten A und B entsprechend schnell ein kovalentes Netzwerk zwischen Gelatine und dem Aldehyd geschaffen.

Dabei liegt innerhalb der Komponente B bevorzugt ein Aldehyd vor, je nach Bedarf bevorzugt auch mehrere verschiedene Aldehyde. Als Vernetzer ist dabei bereits ein einwertiger Aldehyd, insbesondere Formaldehyd, geeignet. Bevorzugt umfasst der Vernetzer einen mehrwertigen Aldehyd, der mehr als eine Aldehyd-Gruppe als funktionelle Gruppe aufweist. Damit finden mittels nur eines Moleküls entsprechend der Aldehyd-Gruppen Vernetzungsreaktionen in mehrere Richtungen statt. Es wird weniger Vernetzer benötigt, um ein stark vernetztes Polymer zu erhalten. Besonders bevorzugt ist dabei der Vernetzer mit einem zweiwertigen Aldehyd gestaltet, mit dem Vernetzungsreaktionen in zwei Richtungen ablaufen. Ganz besonders bevorzugt ist dabei der Vernetzer mit Glutaraldehyd bzw. 1 ,5-Pentandial gestaltet. Insbesondere besteht der Vernetzer aus Glutaraldehyd. Dabei ist Glutaraldehyd überraschenderweise besonders geeignet, obwohl Glutaraldehyd als Gefahrstoff gekennzeichnet ist. Glutaraldehyd ist als toxisch, gesundheits- sowie gewässergefährdend eingestuft und wirkt als Desinfektionsmittel. Damit ist es zunächst überraschend, dass Glutaraldehyd zum Herstellen eines biologisch abbaubaren und verfütterbaren Materials verwendet wird. Es hat sich überraschenderweise herausgestellt, dass sehr wenig Glutaraldehyd ausreicht, um eine effektive Vernetzung zu erreichen. Damit ist alles verwendete Glutaraldehyd verbraucht und kovalent in die Netzstruktur des hergestellten Materials eingebaut. Eine schädliche Wirkung des Glutaraldehyds ist vermieden. Zudem ist mit dem Glutaraldehyd als Vernetzer eine optimale Reaktionsgeschwindigkeit zwischen den Komponenten A und B erreicht. Die Reaktionsgeschwindigkeit liegt im Bereich von Minuten. Damit bleibt ausreichend Zeit, nach dem Vermischen der Komponenten A und B eine dabei entstehende zähe, insbesondere zähflüssige Masse in eine gewünschte Form zu bringen und/oder auf eine gewünschte Oberfläche, wie auf ein Hautgewebe, auf Biomasse oder auf einen Gegenstand aufzubringen. Nach dem derartigen Formen bzw. Aufbringen härtet die Masse mit der erreichten Reaktionsgeschwindigkeit bzw. Vernetzungsgeschwindigkeit im Bereich von Minuten schnell aus.

Insbesondere ist dabei Glutaraldehyd als 50-prozentige Glutaraldehydlösung in Wasser verwendet. Dabei ist ein Anteil der 50-prozentigen Glutaraldehydlösung in Bezug auf das Gewicht des Mehrkomponentensystems von bevorzugt 0,05 bis 0,50 Gewichtsprozent (Gew.-%), besonders bevorzugt von 0,10 bis 0,40 Gew.-%, ganz besonders bevorzugt von 0,14 bis 0,28 Gew.-% insbesondere hinsichtlich seiner Reaktionszeit von Vorteil. So konnte mit einem Anteil von 0,21 Gew.-% ein Aushärten innerhalb von drei Minuten erreicht werden. Dabei ist die 50-prozentige Glutaraldehydlösung bevorzugt verdünnt auf 25 %, besonders bevorzugt verdünnt auf 12,5 % und ganz besonders bevorzugt verdünnt auf 6,25 % verwendet. Mit einer zunehmenden Verdünnung konnte eine bessere Vermischung schon bei einem Zugeben der Komponente B zur Komponente A erreicht werden. Eine andernfalls zu beobachtende Vernetzungsreaktion der Komponenten bereits an einer Zugabestelle unter Klumpenbildung ist vermieden. Werden andere Vernetzer verwendet, ist es bevorzugt, wenn diese Vernetzer insbesondere hinsichtlich Wasserlöslichkeit, Reaktivität, Mischungsverhältnis und Gefahrstoffkennzeichnung ähnliche Eigenschaften wie Glutaraldehyd haben.

Ferner ist erfindungsgemäß bei dem Mehrkomponentensystem und dem Material der Elastifizierer und/oder Plastifizierer ausgewählt aus einer Gruppe, die Alkohole, insbesondere mehrwertige Alkohole, längerkettige Alkohole, ungesättigte Alkohole, zyklische Alkohole, Monoterpene, Sesquiterpene, Diterpene, Triterpene, Tetraterpene, Carbonsäureester, Phospholipide oder eine Kombination davon umfasst.

Ein Alkohol als Elastifizierer und/oder Plastifizierer umfasst Hydroxygruppen, an denen der Elastifizierer und/oder Plastifizierer zu vernetzen ist. Insbesondere bei mehrwertigen Alkoholen liegen mehrere Hydroxygruppen pro Molekül vor, was zu einer besonders starken Vernetzung führt. Dabei sind als mehrwertige Alkohole bevorzugt Glykol, besonders bevorzugt Zuckeralkohole wie Sorbit und ganz besonders bevorzugt Glycerin verwendet. Insbesondere ist mit Sorbit und/oder Glycerin mittels deren wasserbindenden Eigenschaften ein Material geschaffen, das bevorzugt als Wasserspeicher und Feuchthaltemittel dient. Dazu haben sich mehrwertige Alkohole mit 3 bis 6 Kohlenstoffatomen als günstig erwiesen.

Unter dem Begriff der längerkettigen Alkohole sind insbesondere aliphatische Alkohole mit 3 bis 24, bevorzugt 6 bis 20, besonders bevorzugt 12 bis 18 Kohlenstoffatomen zu verstehen. Damit weisen längerkettige Alkohole den Vorteil auf, dass je nach Kettenlänge die elastischen/plastischen Eigenschaften des mit dem Mehrkomponentensystem hergestellten Materials variierbar sind. Je kürzer die Kettenlänge ist, umso plastischer ist das Material. Je länger die Kettenlänge ist, umso elastischer ist das Material. Diese Eigenschaften sind zusätzlich mit der Menge und Art des Vernetzer steuerbar. Viel Vernetzer bewirkt ein eher elastisches Material, während im Vergleich dazu mit wenig Vernetzer ein eher plastisches Material gebildet ist. Je nach Anwendungsgebiet sind bevorzugt auch polymere Alkohole, wie beispielsweise Polyethylenglykol, verwendet. Als zyklischer und zugleich ungesättigter Alkohol ist bevorzugt Ascorbinsäure verwendet.

Ferner ist es vorteilhaft, den Elastifizierer und/oder Plastifizierer aus der Untergruppe der Terpene auszuwählen. Terpene kommen als sekundäre Inhaltsstoffe in Organismen natürlich vor. Terpene bzw. Monoterpene sind ein Dimeres von Isopren. Dabei zählen zu den Terpenen Alkohole, Ether, Aldehyde und Ketone mit ihren entsprechenden funktionellen Gruppen. Bevorzugt sind hiervon die Terpenalkohole ausgewählt, besonders bevorzugt ein monocyclischer Monoterpen-Alkohol, wie insbesondere Menthol. Innerhalb der Sesqui-, Di-, Tri- und Tetraterpene sind die Carotinoide als Tetraterpene bevorzugt verwendet.

Innerhalb der Untergruppe der Carbonsäureester sind bevorzugt Stearate, Fette und Öle ausgewählt, besonders bevorzugt Palmöl und ganz besonders bevorzugt Kokosöl bzw. Kokosfett, das bei Raumtemperatur im festen Aggregatzustand vorliegt. Solche Öle und Fette sind stark hydrophob. Ein damit hergestelltes Material hat sich als besonders langlebig erwiesen. Als Phospholipide sind insbesondere Lecithine als Elastifizierer verwendet. Zusätzlich wirken die Phospholipide als Emulgator. Auch Carbonsäuren, insbesondere längerkettige Carbonsäuren, wie Fettsäuren sind als Elastifizierer und/oder Plastifizierer geeignet, ebenso Polyvinylalkohol und Polyvinylacetat.

Insgesamt wurde festgestellt, dass für die Haltbarkeit bzw. Langlebigkeit des Materials die Vernetzung entscheidend ist, die Langlebigkeit jedoch von der Kettenlänge des Elastifizierers mit beeinflusst wird. Je länger die Kette an Kohlenstoffatomen des Elastifizierers ist, das heißt, je hydrophober der Elastifizierer ist, desto langlebiger ist das aus dem Mehrkomponentensystem hergestellte Material.

Ganz besonders bevorzugt werden als Elastifizierer und/oder Plastifizierer nur Verbindungen verwendet, die natürlichen Ursprungs sind, wie zum Beispiel Glycerin, Kokosöl und/oder Menthol. Mit solchen natürlichen Verbindungen ist ein Material geschaffen, das biologisch abbaubar und gesundheitlich unbedenklich ist. Wird das Material als Überzug für Biomasse genutzt, ist das Material sogar zusammen mit der Biomasse an Nutztiere in der Rinderhaltung und Bakterien in der Biogasanlage verfütterbar.

Ferner hat bei dem erfindungsgemäßen Mehrkomponentensystem und Material vorteilhaft das Wasser der Komponente A einen Wasseranteil von etwa 30 bis 97 Gew.-%, bevorzugt von etwa 40 bis 60 Gew.-%, besonders bevorzugt von etwa 50 Gew.-% bezogen auf das Gewicht des Mehrkomponentensystems. Es hat sich gezeigt, dass trotz eines solch hohen Wasseranteils im Zusammenwirken mit dem Vernetzer der Komponente B ein überraschend stabiles Material hergestellt ist. Der hohe Wasseranteil in der Komponente A trägt dazu bei, dass zunächst die Bestandteile der Komponente A gut zu vermischen sind. Bei einem nachfolgenden Vermischen der beiden Komponenten A und B wird die Komponente B, die in bevorzugt wässriger Lösung vorliegt, gut und damit gleichverteilt mit der Komponente A vermischt. Dabei entsteht mittels des hohen Wasseranteils ferner zunächst eine flüssige bis zähflüssige Masse. Damit kann die derartige Masse sofort nach dem Vermischen fertigungstechnisch einfach flüssig weiterverarbeitet und flüssig in die gewünschte Form oder auf die gewünschte Oberfläche bzw. das gewünschte Substrat gebracht werden. Mittels der guten Reaktivität des Vernetzers erhöht sich die Viskosität schon kurz nach dem Vermischen und Aufbringen so, dass eine standfeste Masse resultiert, die zum Beispiel auf schrägen Flächen nicht abläuft.

Eine solche flüssige bis zähflüssige und relativ schnell aushärtende Masse hat den Vorteil, dass sie auch zum Auftragen auf das Substrat in flüssiger Form appliziert werden kann. Dabei ist die Masse bevorzugt zu sprühen oder spritzen, was mit einem Sprühgerät oder einer Spritzmaschine einfach und maschinell zu bewerkstelligen ist. Damit ist es möglich, auch große Flächen, wie insbesondere große Biomasse-Siloanlagen, maschinell mittels flüssiger Applikation abzudecken. Die flüssig applizierte Masse härtet dann so schnell aus, dass sie zum Beispiel auf gewölbten Flächen nicht abläuft. Es können insbesondere für eine Biomasse- bzw. Silageabdeckung auch hohe gewölbte Flächen einfach überzogen werden. Ferner ist die flüssige Masse auf einen Erdboden insbesondere an abfallenden Böschungen bzw. Hängen zum Vermindern einer Erosion einfach aufzusprühen bzw. aufzuspritzen. Zudem ist bevorzugt in die flüssige Masse auch Saatgut eingemischt, das zusammen mit der flüssigen Masse auf schräge Flächen appliziert werden kann. Damit sind insbesondere schräge Flächen zum Beispiel entlang von Autobahnen wesentlich leichter als bisher zu begrünen. Ferner sind mit der flüssigen und schnell aushärtenden Masse Oberflächen von Gegenständen verschiedenster Form auch an deren Seitenflächen einfach zu besprühen. Es bildet sich ein schnell aushärtender Überzug, der nicht abläuft. Ein solcher Überzug dient bevorzugt als temporäre Schutzfolie und kann damit weitere Kunststoff-Folien ersetzen. Dazu ist mit dem genannten Wasseranteil materialsparend ein vergleichsweiser dünner Auftrag ähnlich einer Folie ermöglicht, der je nach Anwendungsgebiet ausreichend ist.

Vorteilhaft beträgt dabei ein Mischungsverhältnis zwischen den Komponenten A und B in Bezug auf das Volumen etwa 10 : 1 bis 20000 : 1, bevorzugt etwa 200 : 1 bis 1500 : 1, besonders bevorzugt etwa 700 : 1. Dabei wird angenommen, dass die beiden Komponenten A und B ein Dichteverhältnis von 1 : 1 aufweisen. Mit einem solchen Mischungsverhältnis liegt ein hoher Anteil der Komponente A im Verhältnis zu einem geringen Anteil der Komponente B vor, die den Vernetzer als Reaktivvernetzer umfasst. Damit muss zum Vorteil für einen Anwender nur eine geringe Menge an reaktiverem Vernetzer gehandhabt werden. Zudem ist mit dem Mischungsverhältnis eine möglichst kurze Reaktionszeit binnen von Minuten bis zur Bildung einer standfesten Masse erreicht, die zugleich eine ausreichende Verarbeitungszeit bietet. Durch die Menge an Vernetzer kann die Verarbeitungszeit bzw. Reaktionszeit gesteuert werden.

Darüber hinaus umfasst die Komponente A erfindungsgemäß vorteilhaft als weiteren Bestandteil mindestens ein Konservierungs- und/oder Schutzmittel bevorzugt zum Konservieren und/oder Schützen des mittels des Mehrkomponentensystems hergestellten Materials. Damit ist eine ausreichend hohe Langzeitstabilität des hergestellten Materials erreicht. Eine vorzeitige Zersetzung oder eine vorzeitige, unerwünschte Beeinträchtigung durch Organismen und Mikroorganismen ist verhindert. Insbesondere ist dabei das Konservierungs- und/oder Schutzmittel ausgewählt aus einer Gruppe, die Natriumchlorid, Benzoate, Natriumsulfit, Schwefel, Ascorbinsäure, Borax, Harnstoff oder eine Kombination davon umfasst. Es hat sich herausgestellt, dass bevorzugt Natriumchlorid und/oder Schwefel im hergestellten Material besonders wirksam gegen Schneckenfraß sind. Zugleich ist damit das hergestellte Material ernährungsphysiologisch besonders wertvoll für Nutztiere, an die das Material dann zusammen mit Silage verfüttert werden kann.

Benzoate als Salze der Benzoesäure, bevorzugt Natriumbenzoat, wirken besonders effektiv gegen eine Verbreitung von Pilzen und Bakterien im und am hergestellten Material. Zugleich ist mit dem Benzoat bzw. der Benzoesäure insbesondere ein Überzugsmaterial von Silage erhalten, das in der Rinderhaltung als Ergänzungsfuttermittel verwendet ist. Damit kann eine positive Wirkung auf Tiergesundheit und Mastleistung erreicht werden. Ferner sinken Emissionen an Ammoniak und Stickoxid in der Gülle. Ferner wirkt Natriumsulfit insbesondere als Konservierungsmittel und Antioxidationsmittel im hergestellten Material. Zudem ist mit Ascorbinsäure bzw. Vitamin C insbesondere zugleich eine antioxidierende und ernährungsphysiologisch wertvolle Wirkung erreicht. Mit Borax ist ein Material hergestellt, das insbesondere gegen Schimmel und Insekten wirkt, sowie zugleich verfüttert werden kann. Mit Harnstoff als Konservierungsmittel ist insbesondere nicht nur eine bakterizide Wirkung des hergestellten Materials erreicht, sondern wegen der wasserbindenden Eigenschaften von Harnstoff zusätzlich ein Material, das besonders gut und umfangreich Wasser binden kann. Zugleich ist mit dem Harnstoff eine Stickstoffquelle zum Bilden von Proteinen in einer Ernährung von Wiederkäuern bei der Rinderhaltung vorgesehen. Bevorzugt wird dazu das Material als Überzugsmaterial für Silage verwendet und mit verfüttert. Ebenso ist mit dem Harnstoff ein Konservierungsmittel verwendet, das zugleich als Dünger und Säurepuffer dient. Damit wird das Material bevorzugt als Überzugsmaterial für einen Erdboden oder Saatgut verwendet.

Ferner umfasst erfindungsgemäß vorteilhaft die Komponente A als weiteren Bestandteil mindestens einen Füllstoff, insbesondere mindestens einen Funktionsfüllstoff. Unter einem Füllstoff ist ein Stoff zu verstehen, mit dem die restlichen Bestandteile der Komponente A bzw. das daraus hergestellte Material gefüllt bzw. aufgefüllt sind. Damit sind die eine Matrix bildenden Bestandteile der Komponenten A und B mit dem Füllstoff zu einem gewünschten Volumen bzw. zu einer gewünschten Masse ergänzt. Das daraus hergestellte Material ist damit in seiner Konsistenz gestärkt und erhält eine größere Dichte. Damit ist ein Material geschaffen, dass eine ausreichende Schwere aufweist, um als Überzugsmaterial auf einem zu überziehenden bzw. abzudeckendem Substrat stabil auf und an dem Substrat zu liegen. Bei einem Überzugsmaterial für Biomasse erübrigen sich damit zusätzliche Beschwerungselemente, wie Sandsäcke, die bei herkömmlichen Kunststoff-Folien notwendig sind.

Bevorzugt ist dabei der Füllstoff ein Funktionsfüllstoff, der zusätzlich eine weitere Funktion erfüllt. Dabei gehören zu dem mindestens einen Funktionsfüllstoff mindestens ein organischer und/oder mineralischer Füllstoff. Besonders bevorzugt ist der mindestens eine organische Funktionsfüllstoff ausgewählt aus einer Gruppe von pflanzlichen Füllstoffen, die Stärke, Cellulose, Holz, Stroh, Schilf, Hanf, Jute und sonstiges Pflanzenmaterial oder eine Kombination davon umfasst. Insbesondere liegt dabei die Cellulose als Papier vor und das sonstige Pflanzenmaterial insbesondere als Getreideschalen und/oder Nussschalen. Mit solchen Funktionsfüllstoffen liegen Fasern unterschiedlicher Härte vor, mit denen das aus dem Mehrkomponentensystem hergestellte Material verstärkt ist. Damit kann das Material ein seiner mechanischen Festigkeit an das jeweilige Anwendungsgebiet angepasst sein. Zudem üben solche Fasern eine Ankerwirkung in der Matrix des hergestellten Materials aus, mit der das Material stabilisiert ist. Ganz besonders bevorzugt ist der mindestens eine Funktionsfüllstoff eine Kohle und/oder eine Kombination mit den vorgenannten pflanzlichen Füllstoffen. Dabei ist die Kohle insbesondere eine Aktivkohle, die im hergestellten Material desinfizierend wirkt und dazu Bakterien einschließt. Alternativ oder zusätzlich ist die Kohle insbesondere eine Holzkohle, die zum Schutz vor ultravioletter Strahlung bzw. UV-Strahlung wirkt. Damit ist das Material vor einer vorzeitigen Zersetzung durch UV-Strahlung geschützt. Zudem ist mit der Kohle zugleich eine färbende Wirkung erreicht.

Zudem bevorzugt ist der mindestens eine Funktionsfüllstoff ausgewählt aus einer Gruppe von mineralischen Füllstoffen, die Tonminerale, Talkum, Kaolin, Gips, Bariumsulfat, Kreide, Titanweiß oder eine Kombination davon umfasst. Damit ist eine Sperrwirkung des hergestellten Materials insbesondere zum Sperren bzw. Abhalten von Wasser, Sauerstoff und/oder UV-Licht von einem zu überziehenden Substrat erreicht. Zudem ist insbesondere mit Tonmineralen, Talkum, Kaolin, Gips, Bariumsulfat und/oder Kreide als Funktionsfüllstoff ein Material hergestellt, dass relativ weich ist und entsprechend plastisch auf mechanische Beanspruchung reagiert. Ferner ist insbesondere mittels Tonmineralen, Talkum und/oder Kaolin eine Hydrophobierung und eine Sauerstoffundurchlässigkeit des Materials geschaffen. Damit kann das zu überziehende Substrat vor Wasser und Sauerstoff geschützt werden. Insbesondere hat sich Talkum mittels seiner weichen und wasserabweisenden Eigenschaften als besonders geeignet herausgestellt. Damit ist ein besonders gut wasserabweisendes und abdichtendes Material geschaffen. Besonders bevorzugt ist als Tonmineral Bentonit ausgewählt. Damit ist ein Material hergestellt, das eine besonders gute Sperrwirkung gegen Wasser und Sauerstoff aufweist, besonders quell- und wasseraufnahmefähig ist und damit zugleich als Wasserspeicher dient. Des Weiteren ist insbesondere mit Gips, Bariumsulfat, Kreide und/oder Titanweiß ein Weißpigment in das Material eingebracht, das sich als Schutz gegen UV-Licht erwiesen hat. Dabei ist das Material selbst und das zu überziehende Substrat vor UV-Licht geschützt.

Erfindungsgemäß vorteilhaft umfasst die Komponente A als weiteren Bestandteil mindestens einen färbenden Stoff zum Färben eines mittels des Mehrkomponentensystems hergestellten Materials. Damit kann dem Material je nach Anwendungsgebiet eine gewünschte Farbe gegeben werden. Insbesondere ist dabei der färbende Stoff ausgewählt aus einer Gruppe, die Ruß, Talkum, Bariumsulfat, Kreide, Titanweiß oder eine Kombination davon umfasst. Mit Ruß ist ein Schwarzpigment mit einer besonders guten Beständigkeit gegen UV-Strahlung verwendet. Bariumsulfat, Kreide und Titanweiß bieten ein Weißpigment.

Darüber hinaus umfasst die Komponente A erfindungsgemäß vorteilhaft als weiteren Bestandteil mindestens einen Wirkstoff, der insbesondere ausgewählt ist aus einer Gruppe, die Dünger, Pflanzenschutzmittel, Duftstoffe, pflanzliche Wirkstoffe, Medikamente oder eine Kombination davon umfasst. Damit ist der Wirkstoff dann in dem mittels des Mehrkomponentensystems hergestellten Material als Depot eingelagert bzw. deponiert. Das Material dient dabei als Matrix für den Wirkstoff. In der Matrix ist also ein Wirkstoffvorrat gebildet, der bei einem Zerfall bzw. einer Zersetzung der Matrix zeitlich verzögert und sukzessive abzugeben ist. Je nach Anwendungsgebiet des Materials ist dabei der passende Wirkstoff ausgewählt.

Bei einem bevorzugten Anwendungsgebiet des Materials als Überzugsmaterial für Saatgut ist als Wirkstoff mindestens ein Pflanzenschutzmittel ausgewählt. Dabei ist das mindestens eine Pflanzenschutzmittel insbesondere ein Fungizid und/oder ein Insektizid. Mittels des Fungizids ist das Saat- und Pflanzgut vor einem Pilzbefall und/oder mittels des Insektizids gegen Schädlinge geschützt. Damit ist das Material ein wirksamer Beizersatz. Alternativ oder zusätzlich ist als Wirkstoff zudem mindestens ein Dünger ausgewählt. Damit ist der Dünger am Saatgut in der Matrix gebunden auszubringen und kann vom Saatgut besonders effektiv beim Aufwachsen des keimenden Saatguts genutzt werden.

Bei einem bevorzugten Anwendungsgebiet des Materials als Überzugsmaterial für ein Erdreich oder Pflanzsubstrat insbesondere als Ersatz von Mulchfolie oder Substratfolie ist als Wirkstoff mindestens ein Dünger und/oder Pflanzenschutzmittel ausgewählt. Dabei ist das Pflanzenschutzmittel insbesondere mindestens ein Herbizid, Fungizid, Insektizid und/oder Molluskizid. Mit dem mindestens einem Herbizid wird in Kombination mit einer unkrautunterdrückenden Wirkung durch ein Abdecken des Erdreichs mittels des Materials besonders effektiv Unkraut bekämpft. Je nach Bedarf ist zusätzlich mindestens ein Fungizid, Insektizid und/oder Molluskizid im Material enthalten. Mit dem Molluskizid sind insbesondere Schnecken wirksam zu bekämpfen. Insgesamt wird der mindestens eine Wirkstoff nach dem Auftragen des Materials auf das Erdreich und/oder das Pflanzsubstrat zeitversetzt und langsam abgegeben. Damit ist die Wirkungsdauer des mindestens einen Wirkstoffs entsprechend verlängert. Zudem ist der Wirkstoff im Überzugsmaterial in Pflanzennähe gehalten und kann dort gezielt seine Wirkung entfalten. Ein unerwünschtes Auswaschen des Wirkstoffs und gegebenenfalls Eindringen in das Grundwasser ist verhindert.

Bei einem bevorzugten Anwendungsgebiet des Materials als Überzugsmaterial für Gegenstände zum Schutz von deren Oberflächen ist als Wirkstoff je nach Bedarf insbesondere ein UV-Schutzmittel, ein Korrosionsschutzmittel und/oder ein Farbstoff ausgewählt. Des Weiteren ist das Material bevorzugt als Folie genutzt, die insbesondere spezielle Eigenschaften aufweist. Dazu ist fertigungstechnisch besonders einfach das Mehrkomponentensystem mit den gewünschten Wirkstoffen versehen, um die speziellen Eigenschaften des daraus hergestellten Materials zu erreichen.

Bei einem bevorzugten Anwendungsgebiet des Materials als Überzugsmaterial für Gewebe, insbesondere als Wundverbandmaterial, ist als Wirkstoff mindestens ein Duftstoff, pflanzlicher Wirkstoff, Medikament oder eine Kombination davon ausgewählt. Damit ist mit dem Überzugsmaterial ein medizinischer Wundauftrag ähnlich eines medizinischen Pflasters geschaffen, mit dem ein heilender pflanzlicher Wirkstoff und/oder ein Medikament über einen längeren Zeitraum an das Gewebe abgegeben werden kann. Mittels einer solchen Depotwirkung des Materials können heilungsfördernde Medikamente als Wirkstoff im Material implementiert werden.

Ferner ist die Erfindung auf ein Verfahren zum Herstellen eines Materials mittels eines solchen Mehrkomponentensystems nach Anspruch 8 gerichtet, mit den Schritten: Bereitstellen von Bestandteilen einer Komponente A, Vermischen der bereitgestellten Bestandteile der Komponente A miteinander, Bereitstellen einer davon reaktionsinhibierend getrennt angeordneten Komponente B, Aufheben der reaktionsinhibierenden Trennung mittels eines Vermischens der beiden Komponenten A und B, Formen eines dabei entstehenden Gemisches und Aushärten lassen des geformten Gemisches, wobei die Gelatine und der Vernetzer die kovalente Vernetzung bilden, das heißt miteinander chemisch reagieren. Zudem ist die Erfindung auch auf ein Material gerichtet, das mittels eines derartigen Verfahrens hergestellt worden ist.

Das mit dem derartigen Verfahren herzustellende Material wird je nach Bedarf insbesondere direkt vor Ort geschaffen. Dazu wird nur die reaktionsinhibierende Trennung mittels des Vermischens der Komponenten A und B aufgehoben. Bei und nach dem Vermischen der Komponenten A und B bildet sich eine zunächst zähe bis zähflüssige Masse als entstehendes Gemisch, die vor ihrem Aushärten in eine gewünschte Form gebracht wird.

Bei dem erfindungsgemäßen Verfahren werden zunächst die einzelnen Bestandteile der Komponenten A miteinander vermischt, bevor eine dabei entstehende Mischung als Komponente A mit der Komponente B vermischt wird. Es wird auf diese Weise eine besonders gleichmäßige Verteilung der Bestandteile der Komponente A erreicht, bevor die Komponente B hinzugefügt wird. Insbesondere wird damit die Gelatine in der Komponente A entsprechend gleichmäßig verteilt, bevor sie mit dem Vernetzer der Komponente B reagiert und kovalente Vernetzungen bildet. Es entsteht ein gleichmäßig vernetztes und damit stabiles Material. Insbesondere wird dabei die Komponente A auf eine Temperatur von 30 °C bis 70 °C, bevorzugt von 40 °C bis 60 °C, besonders bevorzugt auf 50 °C erhöht. Damit wird die Gelatine besonders gut in Wasser gelöst und verteilt.

Erfindungsgemäß ferner vorteilhaft wird beim Vermischen der beiden Komponenten A und B, die Komponente B zur Komponente A hinzugefügt und die beiden Komponenten A und B miteinander verrührt. Damit wird der Vernetzer sofort in der Komponente A verdünnt. Eine besonders gleichmäßige Reaktion mit den Bestandteilen der Komponente A, insbesondere mit der Gelatine, wird erreicht. Besonders vorteilhaft wird dazu vor dem Vermischen der beiden Komponenten A und B, der Vernetzer der Komponente B mit Wasser verdünnt.

Zudem wird erfindungsgemäß vorteilhaft beim Vermischen der Bestandteile der bereitgestellten Komponente A miteinander zunächst die Gelatine mit einer ersten Teilmenge des zur Komponente A gehörigen Wassers und nachfolgend mit einer zweiten Teilmenge des zur Komponente A gehörigen Wassers vermischt. Überraschenderweise wird damit eine besonders gute Lösung der Bestandteile der Komponente A erreicht. Bevorzugt wird dabei die Gelatine in der ersten Teilmenge des Wassers kalt vorgequollen. Eine solche Quellung wird besonders bevorzugt durch eine Beaufschlagung mit Druck beschleunigt. Insbesondere wird nachfolgend der Elastifizierer und/oder Plastifizierer zur vorgequollenen Gelatine gegeben und damit vermischt. Es entsteht eine milchig-trübe Suspension, zu der nachfolgend die zweite Teilmenge des Wassers gegeben wird. Bevorzugt weist dabei die zweite Teilmenge des Wassers eine Temperatur von 80 °C bis 100 °C, besonders bevorzugt von 90 °C bis 100 °C auf. Damit löst sich nach Zugabe der derart heißen zweiten Teilmenge des Wassers zur Mischung aus der vorgequollenen Gelatine und dem Elastifizierer und/oder Plastifizierer die Gelatine bei einer Mischtemperatur von etwa 40 °C bis 60 °C, bevorzugt von etwa 50 °C. Dabei werden die erste und zweite Teilmenge des Wassers bevorzugt in einem Volumenverhältnis von etwa 40 : 60, besonders bevorzugt von etwa 50 : 50 zugegeben. Überraschend wurde festgestellt, dass damit ein besonders gutes Lösen ohne Zersetzung der Gelatine erreicht wird.

Des Weiteren wird bei dem erfindungsgemäßen Verfahren vorteilhaft zum Formen des entstehenden Gemisches das Gemisch auf ein Substrat aufgetragen. Dabei ist das Gemisch eine zunächst flüssige bis zähflüssige Masse, die innerhalb einer Reaktionszeit der Gelatine mit dem Vernetzer in einem Zeitraum von wenigen Minuten auf das Substrat flüssig bis zähflüssig appliziert wird. Zum Applizieren wird die Masse auf das Substrat insbesondere gesprüht, gespritzt, gegossen, gespachtelt, gestrichen und/oder gerakelt. Dabei ist das Substrat vorteilhaft eine Biomasse, eine Oberfläche eines Gegenstands und/oder ein Gewebe.

Zu einem derartigen Auftragen bzw. Applizieren ist eine Applikationsmaschine bzw. Maschine vorgesehen, die ebenfalls Umfang der Erfindung ist. Die derartige Maschine ist dazu angepasst, die Komponenten A und B unmittelbar vor dem Auftragen zu mischen und das dabei entstehende Gemisch unmittelbar nach dem Mischen auf dem Substrat zu verteilen. Dazu umfasst die Maschine bevorzugt zwei Behälter zum jeweils getrennten Aufnehmen der Komponente A und B. Dabei weist insbesondere der Behälter für die Komponente A eine Rührvorrichtung auf. Beide Behälter sind fluidleitend mit einer Mischeinrichtung verbunden, mit der die Komponenten A und B miteinander zu vermischen sind. Von der Mischeinrichtung weg ist das dabei entstehende Gemisch mittels einer Aufbringeinrichtung auf das Substrat aufzutragen. Dazu umfasst die Aufbringeinrichtung bevorzugt mindestens eine Düse, mit der das Gemisch auf das Substrat relativ gleichmäßig verteilt aufzubringen ist. Die Maschine ist dabei bevorzugt auch ein Gerät, das mit einer auch anderweitig nutzbaren Maschine, wie zum Beispiel einem Traktor, anzutreiben ist.

Vorteilhaft ist die Maschine ferner dazu angepasst, das Substrat vor dem Auftragen zu glätten. Damit ist insbesondere die Biomasse vor dem Auftragen zu glätten, um eine weitgehend kompakte und glatte Oberfläche mit einer in der Natur der Biomasse vorhandenen Rauheit zu erreichen. Besonders von Vorteil ist die Maschine dazu angepasst, das Glätten, Vermischen und Auftragen in einem Arbeitsdurchgang durchzuführen. Eine solche Maschine ist insbesondere ähnlich einer Teermaschine bzw. eines Asphaltfertigers aufgebaut. Zusätzlich zu den beiden Behältern und zur Mischeinrichtung umfasst die Maschine eine Glätteinrichtung, wie bevorzugt eine Walze. Damit ist zusätzlich zum Glätten ein Verdichten der Silage erreicht, während zugleich die Komponenten A und B vermischt und das entstehende Gemisch auf die Silage aufgetragen wird. Ein solches Verfahren zum Aufbringen des vermischten Mehrkomponentensystems auf ein Substrat soll ebenfalls Umfang der Erfindung sein.

Bevorzugt ist die Maschine bzw. das Gerät ähnlich eines Güllefasses mit Schleppschlauch aufgebaut. Dabei ist das Fass mit zwei Behältern zur getrennten Aufnahme der Komponenten A und B gestaltet, die in eine Mischeinrichtung zu fördern sind. Daraus ist die dabei entstehende Masse mittels eines Schleppschlauchverteilers gezielt und oberflächennah auf dem Substrat aufzutragen.

Besonders bevorzugt ist die Maschine ähnlich einer Verputzmaschine aufgebaut, wie sie zum Verputzen von Wänden eingesetzt wird. Mittels einer solchen Verputzmaschine können besonders einfach und unfallvermeidend steile Hügel, wie sie bei großen Siloanlagen häufig vorkommen, nicht nur von oben, sondern auch von der Seite mit der zähflüssigen Masse abgespritzt werden.

### Kurzbeschreibung der Zeichnungen

Nachfolgend werden Ausführungsbeispiele einer erfindungsgemäßen Lösung anhand der beigefügten schematischen Zeichnungen näher erläutert. Es zeigt:
- Fig. 1: ein erstes Ausführungsbeispiel eines erfindungsgemäßen Materials als Überzugsmaterial für Biomasse und
- Fig. 2: eine schematische Darstellung von Verfahrensschritten eines erfindungsgemäßen Verfahrens zum Herstellen eines solchen Materials mittels eines erfindungsgemäßen Mehrkomponentensystems.

### Detaillierte Beschreibung der Ausführungsbeispiele

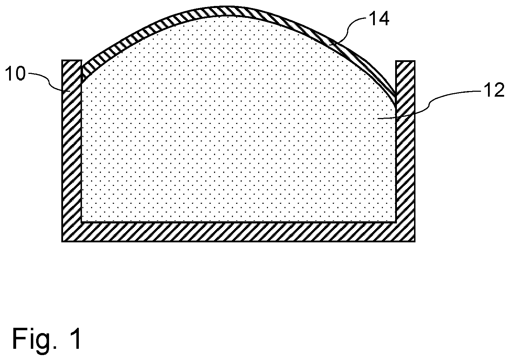

In Fig. 1 ist eine Siloanlage 10 im Querschnitt dargestellt. In der Siloanlage 10 ist eine Maissilage als Biomasse 12 gelagert. Die Biomasse 12 ist mit einem Material 14 überzogen, das als Überzugsmaterial für Silage als Biomasse 12 dient.

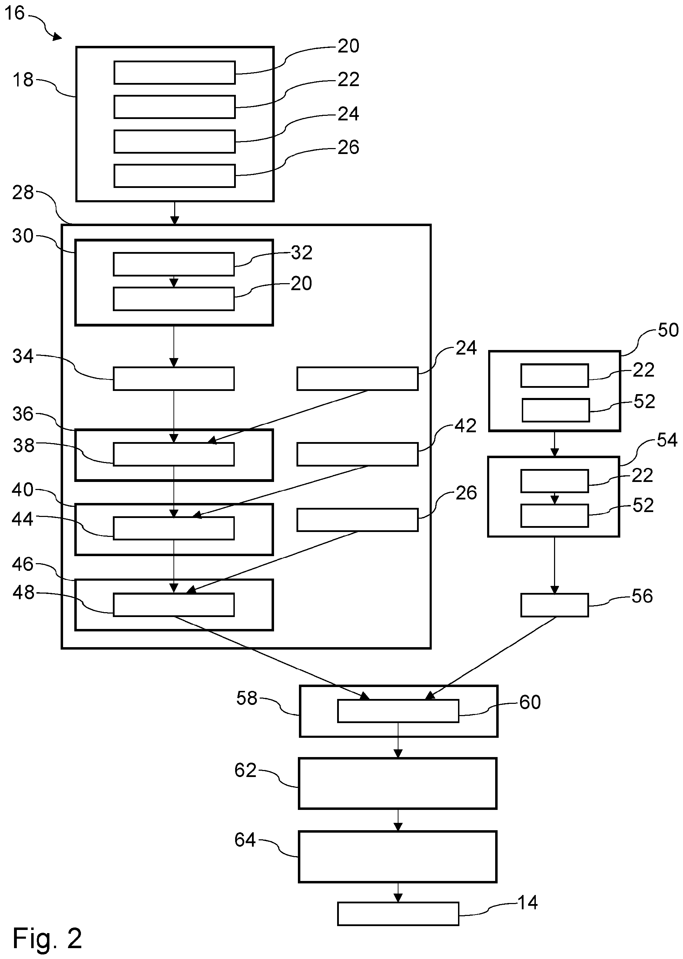

In Fig. 2 ist ein Verfahren 16 zum Herstellen des Materials 14 schematisch mit den wichtigsten Schritten dargestellt. Dabei werden in einem Schritt 18 Bestandteile einer Komponente A bereitgestellt. Dazu gehören Gelatine 20, Wasser 22, ein Elastifizierer und/oder Plastifizierer 24 sowie je nach Anwendungsgebiet mindestens ein weiterer Bestandteil 26. Im ersten Ausführungsbeispiel sind als weitere Bestandteile 26 Papier und Talkum als Füllstoff bzw. Funktionsfüllstoff, Schwefel und Kochsalz als Konservierungs- und Schutzmittel sowie Holzkohle als Funktionsfüllstoff und zugleich färbender Stoff verwendet. Als Elastifizierer 24 ist als erster Teil Glycerin und als zweiter Teil Kokosfett verwendet.

In einem Schritt 28 werden die bereitgestellten Bestandteile der Komponente A vermischt. Dazu wird zunächst in einem Schritt 30 die Gelatine 20 mit einer ersten Teilmenge 32 von 50 % einer Gesamtmenge an Wasser 22 vermischt und vorgequollen. Dabei wird der Schritt 30 bei Raumtemperatur durchgeführt. Die Gelatine 20 wird damit also kalt vorgequollen. Bei Bedarf wird die Quellung mittels Drucks beschleunigt. Eine dabei entstehende vorgequollene Gelatine 34 wird in einem Schritt 36 mit Glycerin als erstem Teil des Elastifizierers 24 versetzt und vermischt. Es entsteht eine milchig-trübe Suspension 38. Zur Suspension 38 wird in einem Schritt 40 eine auf eine Temperatur von 90 °C bis 100 °C erhitzte zweite Teilmenge 42 des restlichen Wassers 22 gegeben. Dabei löst sich die Gelatine 20 bei etwa 50 °C zu einer klaren bis milchigen Lösung 44. Zu der Lösung 44 wird in einem nächsten Schritt 46 mindestens ein weiterer Bestandteil 26 zugegeben.

Als ein solcher Bestandteil 26 wird im ersten Ausführungsbeispiel ein bevorzugt in Streifen geschnittenes Papier als Funktionsfüllstoff zugegeben, in der Lösung 44 durchgequollen und danach mit einem Rührwerk zu einem Brei zerkleinert. Dabei bildet sich eine breiige Masse, in die dann ein geschmolzenes Kokosfett als zweiter Teil des Elastifizierers 24 eingerührt wird. Anschließend wird die zusammen mit dem Schwefel und dem Kochsalz pulverisierte Holzkohle und dann später das Talkum in die Masse eingerührt. Dabei entsteht eine Masse 48, die im weiteren Verfahren 16 als Komponente A verwendet wird.

Als Komponente B wird in einem Schritt 50 eine 50%ige wässrige Glutaraldehydlösung als Härter bzw. Vernetzer 52 bereitgestellt, die reaktionsinhibierend von der Komponente A in einem getrennten Behälter vorgesehen ist. Die 50%ige Glutaraldehydlösung wird in einem Schritt 54 zusätzlich mit weiterem Wasser 22 verdünnt, bis eine 6,25%ige wässrige Glutaraldehydlösung als verdünnte Vernetzer- bzw. Härterlösung 56 vorliegt. Die verdünnte Vernetzerlösung 56 wird als Komponente B in einem Schritt 58 zu der im Schritt 28 hergestellten Masse 48 als Komponente A gegeben, darin eingerührt und vermischt. Dabei entsteht ein Gemisch 60 als zähflüssige Masse, das zügig in einem nachfolgenden Schritt 62 weiterverarbeitet und in eine gewünschte Form gebracht wird. Nach dem Formen 62 härtet das geformte Gemisch 60 dann im Schritt 64 aus. Es entsteht das Material 14.

Im ersten Ausführungsbeispiel wird im Schritt 62 das Gemisch 60 auf der Silage als Biomasse 12 verteilt. Dazu werden die Komponenten A und B erst unmittelbar vor dem Schritt 62 im Schritt 58 vermischt. Das dabei entstehende Gemisch 60 wird dann auf die Silage aufgespritzt und/oder aufgestrichen und damit geformt. Dabei wird das Gemisch 60 derart aufgetragen, dass ein Luftausschluss zwischen der Silage und einer Umgebungsluft erreicht wird. Eine durchschnittliche Schichtdicke von 10 mm hat sich hier als ausreichend herausgestellt. Das beim Auftragen geformte Gemisch 60 härtet in einem Schritt 64 innerhalb weniger Minuten aus. Es bildet sich das Material 14, das eine feste und zugleich elastische sowie sauerstoff- und wasserabweisende und grau gefärbte Beschichtung auf der Silage darstellt. Zudem hat das Material 14 bei einer Auftragsdicke der Beschichtung von 10 mm ein Gewicht von etwa 10 kg pro Quadratmeter Beschichtung. Damit ist die Beschichtung ausreichend schwer, um stabil abdichtend auf der Biomasse 12 aufzuliegen. Zusätzliche Beschwerungselemente wie herkömmliche Sandsäcke sind nicht mehr erforderlich.

Dabei wird das Material 14 des ersten Ausführungsbeispiels mit nachfolgender Rezeptur gemäß Tabelle 1 hergestellt:

**Tabelle 1:**

| Komponente | Bestandteil | Masse in Gramm | Massenanteil in Gew.-% |
|---|---|---|---|
| A | Gelatine | 6,00 | 5,76 |
| | Wasser | 51,80 | 49,74 |
| | Glycerin | 12,00 | 11,52 |
| | Papier | 5,00 | 4,80 |
| | Kokosfett | 14,00 | 13,44 |
| | Holzkohle | 3,00 | 2,88 |
| | Talkum | 8,00 | 7,68 |
| | Schwefel | 0,20 | 0,19 |
| | Kochsalz | 4,00 | 3,84 |
| B | 50%ige Glutaraldehydlösung in Wasser | 0,15 | 0,14 |
| Summe | | 104,15 | 100,00 |

Es hat sich gezeigt, dass mit dem Material 14 gemäß der Rezeptur nach Tabelle 1 eine Maissilage während sechs Monaten über die Wintermonate hinweg zuverlässig abgedeckt werden konnte. Die Maissilage wies eine sehr gute Gärqualität auf. Zudem konnte ein Schneckenfraß des Materials 14 verhindert werden. In einem vorhergehenden Praxisversuch wurde bei einer Abdeckung einer Grassilage während des Sommers im Freien für die Dauer von dreieinhalb Monaten beobachtet, dass eine sehr gute Silagequalität erreicht werden konnte. Eine Beurteilung nach dem "DLG-Schlüssel zur Bewertung von Grassilagen mit Hilfe der Sinnenprüfung" zeigte insgesamt eine sehr gute Gärqualität der Silage. Ferner hat sich gezeigt, dass das Material 14 nach einem Verwenden als Silageabdeckung biologisch abgebaut wird, wenn es am Boden im Freien Witterungs- und Umwelteinflüssen ausgesetzt wird.

Tabelle 2 zeigt vorteilhafte Massenanteilsbereiche der Bestandteile, innerhalb derer je nach Anwendungsgebiet die Eigenschaften des Materials variiert werden können. Durch verschiedene auswählbare weitere Bestandteile 26 als Zusatzstoffe der Komponente A kann ein zugehöriges Eigenschaftsprofil des Materials 14 gesteuert werden. Die weiteren Bestandteile 26 wurden detailliert in der vorhergehenden Beschreibung aufgeführt. Dabei können einzelne Rohstoffe durch andere Rohstoffe mit ähnlicher Wirkung und ähnlichem Eigenschaftsprofil ergänzt oder ersetzt werden. Zum Beispiel kann Kokosfett als Elastifizierer 24 durch Palmöl ergänzt oder ersetzt werden. Dies gilt analog für alle anderen Bestandteile. In Abhängigkeit von Anforderungen an das Material 14 können einzelne Bestandteile bzw. Additive ersetzt oder weggelassen werden. Gemeinsames Merkmal aller Varianten ist eine in der Regel vernetzte Gelatinematrix als Bindemittel. Es kann auch das Mischungsverhältnis der Komponente A zur Komponente B mit einem davon abhängigen Vernetzungsgrad variabel angepasst werden. Damit erfüllt das Eigenschaftsprofil des Materials 14 Anforderungen von verschiedensten Anwendungen.

**Tabelle 2:**

| Komponente | Bestandteil | Masse in Gramm |
|---|---|---|
| A | Gelatine | 1 - 30 |
| | Wasser | 30 - 97 |
| | Elastifizierer und/oder Plastifizierer | 0,3 - 60 |
| | Füllstoffe | 0 - 30 |
| | Konservierungs- und/oder Schutzmittel | 0 - 5 |
| | färbender Stoff | 0 - 5 |
| | Wirkstoff | 0 - 80 |
| B | Vernetzer | 0,005 - 30 |

In einem zweiten, nicht abgebildeten, Ausführungsbeispiel wird das Material 14 mit dem in Fig. 2 dargestellten Verfahren 16 hergestellt. Dabei werden im Unterschied zum ersten Ausführungsbeispiel im Schritt 46 als mindestens ein weiterer Bestandteil 26 zur Komponente A ein UV-Schutzmittel, ein Farbstoff, ein Korrosionsschutzmittel und/oder andere Additive mit der Lösung 44 vermischt. Dabei entsteht eine flüssige Masse 48. Nach dem Vermischen der derartigen Masse 48 der Komponente A mit der verdünnten Vernetzerlösung 56 der Komponente B im Schritt 58 wird das dabei entstehende Gemisch 60 im Schritt 62 auf einen Autolack als zu schützende Oberfläche aufgesprüht. Das nach dem Schritt 64 des Aushärtens entstehende Material 14 ist dann ein Überzugsmaterial, das als temporäre Transportschutzhülle für ein Auto als Gegenstand dient.

In einem dritten, nicht abgebildeten, Ausführungsbeispiel wird das Material 14 ebenfalls mit dem in Fig. 2 dargestellten Verfahren 16 hergestellt. Dabei wird im Unterschied zum ersten und zweiten Ausführungsbeispiel im Schritt 46 als weiterer Bestandteil 26 zur Komponente A mindestens ein Medikament als Wirkstoff zur Lösung 44 zugegeben und vermischt. Dabei entsteht eine flüssige Masse 48 als Komponente A, die mit der verdünnten Vernetzerlösung 56 der Komponente B im Schritt 58 vermischt wird. Das dabei entstehende Gemisch 60 wird im Schritt 62 direkt auf eine Wunde aufgetragen und dort im Schritt 64 aushärten gelassen. Alternativ wird das Gemisch 60 zunächst auf ein Trägermaterial aufgetragen, von dem es nach dem Schritt 64 abgezogen und auf die Wunde aufgebracht wird. Das dabei entstehende Material 14 ist dann ein Überzugsmaterial bzw. Wundabdeckmaterial für ein Gewebe. Wird das Material 14 als Wundabdeckung verwendet, werden benötigte Rohstoffe, wie Gelatine 20, usw. in Qualität und Reinheit so ausgewählt und eine zugehörige Produktion so durchgeführt, wie es für medizinische Produkte erforderlich ist.

Weitere Ausführungsbeispiele des Materials 14 als Überzugsmaterial für Saatgut oder für Erdreich sind nicht näher ausgeführt. Allen gemeinsam ist das Verfahren gemäß Fig. 2. Variiert wird dabei insbesondere das mindestens eine weitere Bestandteil 26.

### Bezugszeichenliste

- 10: Siloanlage
- 12: Biomasse
- 14: Material
- 16: Verfahren
- 18: Schritt: Bereitstellen von Bestandteilen der Komponente A
- 20: Gelatine
- 22: Wasser
- 24: Elastifizierer und/oder Plastifizierer
- 26: mindestens ein weiterer Bestandteil
- 28: Schritt: Vermischen der Bestandteile der Komponente A
- 30: Schritt: Mischen von Gelatine mit Wasser und Vorquellen
- 32: erste Teilmenge Wasser
- 34: vorgequollene Gelatine
- 36: Schritt: Vermischen mit Elastifizierer
- 38: Suspension
- 40: Schritt: Mischen der Suspension mit Wasser
- 42: zweite Teilmenge Wasser
- 44: Lösung
- 46: Schritt: Zugabe und Vermischen mindestens eines weiteren Bestandteils
- 48: Masse
- 50: Schritt: Bereitstellen der Komponente B
- 52: Vernetzer
- 54: Schritt: Verdünnen des Vernetzers
- 56: verdünnte Vernetzerlösung
- 58: Schritt: Vermischen der Komponenten A und B
- 60: Gemisch aus Komponente A und B
- 62: Schritt: Formen des Gemisches
- 64: Schritt: Aushärten lassen des geformten Gemisches

## Patentansprüche

1. Mehrkomponentensystem zum Herstellen eines Materials (14), insbesondere eines Überzugsmaterials für bevorzugt Biomasse (12), mit
einer Komponente A und einer davon reaktionsinhibierend getrennt angeordneten Komponente B,
bei dem die Komponente A als Bestandteile Gelatine (20), Wasser (22) und einen Elastifizierer und/oder Plastifizierer (24) umfasst sowie die Komponente B einen Vernetzer (52) umfasst,
wobei die Gelatine (20) und der Vernetzer (52) dazu angepasst sind, eine kovalente Vernetzung zu bilden, wenn die reaktionsinhibierende Trennung aufgehoben ist,
sowie der Elastifizierer und/oder Plastifizierer (24) ausgewählt ist aus einer Gruppe, die Alkohole, Monoterpene, Sesquiterpene, Diterpene, Triterpene, Tetraterpene, Carbonsäureester, Phospholipide oder eine Kombination davon umfasst,
**dadurch gekennzeichnet, dass** der Elastifizierer und/oder Plastifizierer (24) eine Kombination mit einem innerhalb der Untergruppe der Carbonsäureester ausgewählten Fett und/oder Öl umfasst.

2. Mehrkomponentensystem nach Anspruch 1,
**dadurch gekennzeichnet, dass** der Vernetzer (52) mit mindestens einem Aldehyd, bevorzugt mit einem mehrwertigen Aldehyd, besonders bevorzugt mit einem zweiwertigen Aldehyd und ganz besonders bevorzugt mit Glutaraldehyd gestaltet ist.

3. Mehrkomponentensystem nach einem der Ansprüche 1 bis 2,
**dadurch gekennzeichnet, dass** der Elastifizierer und/oder Plastifizierer (24) ausgewählt ist aus einer Gruppe, die mehrwertige Alkohole, längerkettige Alkohole, ungesättigte Alkohole, zyklische Alkohole, oder eine Kombination davon umfasst.

4. Mehrkomponentensystem nach einem der Ansprüche 1 bis 3,
**dadurch gekennzeichnet, dass** die Komponente A als weiteren Bestandteil (26) mindestens ein Konservierungs- und/oder Schutzmittel umfasst, wobei das Konservierungs- und/oder Schutzmittel insbesondere ausgewählt ist aus einer Gruppe, die Natriumchlorid, Natriumbenzoat, Natriumsulfit, Schwefel, Ascorbinsäure, Borax, Harnstoff oder eine Kombination davon umfasst.

5. Mehrkomponentensystem nach einem der Ansprüche 1 bis 4,
**dadurch gekennzeichnet, dass** die Komponente A als weiteren Bestandteil (26) mindestens einen Füllstoff, insbesondere mindestens einen Funktionsfüllstoff umfasst.

6. Mehrkomponentensystem nach einem der Ansprüche 1 bis 5,
**dadurch gekennzeichnet, dass** die Komponente A als weiteren Bestandteil (26) mindestens einen Wirkstoff umfasst.

7. Material (14), hergestellt mittels eines Mehrkomponentensystems nach einem der Ansprüche 1 bis 6,
bei dem eine Komponente A und eine Komponente B miteinander vermischt sind.

8. Verfahren zum Herstellen eines Materials (14) mittels eines Mehrkomponentensystems nach einem der Ansprüche 1 bis 6, mit den Schritten:
Bereitstellen von Bestandteilen einer Komponente A, wobei die Komponente A als Bestandteile Gelatine (20), Wasser (22) und einen Elastifizierer und/oder Plastifizierer (24) umfasst,
Vermischen der bereitgestellten Bestandteile der Komponente A miteinander, Bereitstellen einer davon reaktionsinhibierend getrennt angeordneten Komponente B, wobei die Komponente B einen Vernetzer umfasst,
Aufheben der reaktionsinhibierenden Trennung mittels eines Vermischens der beiden Komponenten A und B,
Formen eines dabei entstehenden Gemisches (60), und
Aushärten lassen des geformten Gemisches (60), wobei die Gelatine (20) und der Vernetzer (52) die kovalente Vernetzung bilden,
sowie der Elastifizierer und/oder Plastifizierer (24) ausgewählt wird aus einer Gruppe, die Alkohole, Monoterpene, Sesquiterpene, Diterpene, Triterpene, Tetraterpene, Carbonsäureester, Phospholipide oder eine Kombination davon umfasst,
**dadurch gekennzeichnet, dass** der Elastifizierer und/oder Plastifizierer (24) eine Kombination mit einem innerhalb der Untergruppe der Carbonsäureester ausgewählten Fett und/oder Öl umfasst.

9. Verfahren nach Anspruch 8,
**dadurch gekennzeichnet, dass** beim Vermischen der bereitgestellten Bestandteile der Komponente A miteinander zunächst die Gelatine (20) mit einer ersten Teilmenge (32) des Wassers (22) und nachfolgend mit einer zweiten Teilmenge (42) des Wassers (22) vermischt wird.

10. Verfahren nach Anspruch 8 oder 9,
**dadurch gekennzeichnet, dass** zum Formen des entstehenden Gemisches (60) das Gemisch (60) auf ein Substrat aufgetragen wird.

## Claims

1. Multicomponent system for producing a material (14), in particular a coating material, preferably for biomass (12), having a component A and a component B which is arranged separate therefrom so as to inhibit a reaction,
in which component A comprises as constituents gelatin (20), water (22) and an elasticiser and/or plasticiser (24), and component B comprises a crosslinker (52), wherein the gelatin (20) and the crosslinker (52) are adapted to form a covalent crosslinkage when the reaction-inhibiting separation is removed,
and the elasticiser and/or plasticiser (24) is selected from a group which comprises alcohols, monoterpenes, sesquiterpenes, diterpenes, triterpenes, tetraterpenes, carboxylic acid esters, phospholipids or a combination thereof, **characterised in that** the elasticiser and/or plasticiser (24) comprises a combination with a fat and/or oil selected from the subgroup of the carboxylic acid esters.

2. Multicomponent system according to claim 1,
**characterised in that** the crosslinker (52) is configured with at least one aldehyde, preferably with a polyvalent aldehyde, particularly preferably with a divalent aldehyde and very particularly preferably with glutaraldehyde.

3. Multicomponent system according to either claim 1 or claim 2, **characterised in that** the elasticiser and/or plasticiser (24) is selected from a group which comprises polyvalent alcohols, longer-chained alcohols, unsaturated alcohols, cyclic alcohols or a combination thereof.

4. Multicomponent system according to any one of claims 1 to 3, **characterised in that** component A comprises as a further constituent (26) at least one preservative and/or protective agent, wherein the preservative and/or protective agent is selected in particular from a group which comprises sodium chloride, sodium benzoate, sodium sulfite, sulfur, ascorbic acid, borax, urea or a combination thereof.

5. Multicomponent system according to any one of claims 1 to 4, **characterised in that** component A comprises as a further constituent (26) at least one filler, in particular at least one functional filler.

6. Multicomponent system according to any one of claims 1 to 5, **characterised in that** component A comprises as a further constituent (26) at least one active substance.

7. Material (14), produced by means of a multicomponent system according to any one of claims 1 to 6,
in which a component A and a component B are mixed together.

8. Method for producing a material (14) by means of a multicomponent system according to any one of claims 1 to 6, having the steps:
providing constituents of a component A, wherein component A comprises as constituents gelatin (20), water (22) and an elasticiser and/or plasticiser (24), mixing together the provided constituents of component A,
providing a component B which is arranged separate therefrom so as to inhibit a reaction, wherein component B comprises a crosslinker,
removing the reaction-inhibiting separation by mixing the two components A and B,
shaping a mixture (60) that is thereby formed, and
allowing the shaped mixture (60) to cure, wherein the gelatin (20) and the crosslinker (52) form the covalent crosslinkage,
and the elasticiser and/or plasticiser (24) is selected from a group which comprises alcohols, monoterpenes, sesquiterpenes, diterpenes, triterpenes, tetraterpenes, carboxylic acid esters, phospholipids or a combination thereof,
**characterised in that** the elasticiser and/or plasticiser (24) comprises a combination with a fat and/or oil selected from the subgroup of the carboxylic acid esters.

9. Method according to claim 8,
**characterised in that**, when the provided constituents of component A are being mixed together, the gelatin (20) is mixed first with a first partial amount (32) of the water (22) and then with a second partial amount (42) of the water (22).

10. Method according to claim 8 or 9,
**characterised in that**, for shaping the mixture (60) that is formed, the mixture (60) is applied to a substrate.

## Revendications

1. Système de composants multiples destiné à la fabrication d'une matière (14), notamment d'une matière d'enrobage de façon préférée pour de la biomasse (12), avec :
un composant A et un composant B disposé de façon séparée de façon à inhiber toute réaction ;
dans lequel le composant A comprend les constituants gélatine (20), eau (22) et un élastifiant et/ou un plastifiant (24) et le composant B comprend un agent réticulant (52);
dans lequel la gélatine (20) et l'agent réticulant (52) sont adaptés pour former une réticulation covalente lorsque la séparation inhibant la réaction est levée ; et
dans lequel l'élastifiant et/ou le plastifiant (24) est sélectionné dans un groupe comprenant les alcools, les monoterpènes, les sesquiterpènes, les triterpènes, les tétraterpènes et les esters d'acide carboxylique, les phospholipides ou une combinaison de ceux-ci ;
**caractérisé en ce que** l'élastifiant et/ou le plastifiant (24) comprend une combinaison avec à l'intérieur une matière grasse ou une huile sélectionnée dans le sous-groupe des esters d'acide carboxylique.

2. Système de composants multiples selon la revendication 1,
**caractérisé en ce que** l'agent réticulant (52) est réalisé avec au moins un aldéhyde, de façon préférée avec un aldéhyde multivalent, de façon particulièrement préférée avec un aldéhyde bivalent et de façon tout particulièrement préférée avec un glutaraldéhyde.

3. Système de composants multiples selon l'une quelconque des revendications 1 à 2,
**caractérisé en ce que** l'élastifiant et/ou le plastifiant (24) est sélectionné dans un groupe comprenant les alcools multivalents, les alcools à plus longue chaîne, les alcools insaturés, les alcools cycliques ou une combinaison de ceux-ci.

4. Système de composants multiples selon l'une quelconque des revendications 1 à 3,
**caractérisé en ce que** le composant A comprend comme constituant (26) supplémentaire au moins un agent conservateur ou un agent de protection, l'agent conservateur et/ou l'agent de protection étant notamment sélectionné dans un groupe comprenant le chlorure de sodium, le benzoate de sodium, le sulfite de sodium, le soufre, l'acide ascorbique, le borax, la carbamide ou une combinaison de ceux-ci.

5. Système de composants multiples selon l'une quelconque des revendications 1 à 4,
**caractérisé en ce que** le composant A comprend comme constituant (26) supplémentaire au moins un élément de bourrage, notamment au moins un élément de bourrage fonctionnel.

6. Système de composants multiples selon l'une quelconque des revendications 1 à 5,
**caractérisé en ce que** le composant A comprend comme constituant (26) supplémentaire au moins une substance active.

7. Matière (14), fabriquée à l'aide d'un système de composants multiples selon l'une quelconque des revendications 1 à 6,
dans laquelle un composant A et un composant B sont mélangés ensemble.

8. Procédé destiné à la fabrication d'une matière (14) à l'aide d'un système de composants multiples selon l'une quelconque des revendications 1 à 6, avec les étapes suivantes :
mise à disposition des constituants d'un composant A, le composant A comprenant les constituants gélatine (20), eau (22) et un élastifiant et/ou un plastifiant (24) ;
réticulation des constituants mis à disposition du composant A ;
mise à disposition d'un composant B disposé de façon séparée de façon à inhiber toute réaction, le composant B comprenant un agent réticulant ;
levée de la séparation inhibant la réaction par mélange des deux composants A et B ;
formation du mélange (60) en résultant ; et
durcissement du mélange (60) formé, dans lequel la gélatine (20) et l'agent réticulant (52) forme une réticulation covalente ; et
sélection de l'élastifiant et/ou du plastifiant (24) dans un groupe comprenant les alcools, monoterpènes, sesquiterpènes, diterpènes, triterpènes, tétraterpènes, esters d'acide carboxylique, ou phospholipide ou une combinaison de ceux-ci ;
**caractérisé en ce que** l'élastifiant et/ou le plastifiant (24) comprend une combinaison avec une matière grasse ou une huile sélectionnée à l'intérieur du sous-groupe des esters d'acide carboxylique.

9. Procédé selon la revendication 8,
**caractérisé en ce que** lors du mélange des constituants mis à disposition du composant A, la gélatine (20) est d'abord mélangée avec une première quantité partielle (32) d'eau (22) et par la suite avec une deuxième quantité partielle (42) d'eau (22).

10. Procédé selon la revendication 8 ou 9,
**caractérisé en ce que** pour former le mélange (60) résultant, le mélange (60) est appliqué sur un substrat.
